# FASCICULE DE BREVET EUROPEEN

(11) **EP 2 009 999 B1**
(45) Date de publication et mention de la délivrance du brevet: **21.01.2015**
(21) Numéro de dépôt: 07731351.8
(22) Date de dépôt: 24.04.2007
(51) Int. Cl.: A23C 19/082, A23C 19/06

(54) **PROCEDE D'AROMATISATION DE PRODUITS FROMAGERS**
VERFAHREN FÜR DIE AROMATISIERUNG VON KÄSEPRODUKTEN
METHOD FOR FLAVOURING CHEESE PRODUCTS

(30) Priorité: 25.04.2006 FR 0603681
(43) Date de publication de la demande: 07.01.2009
(73) Titulaire: Fromageries Bel, 75008 Paris (FR)
(72) Inventeur: DELESPAUL, Gilbert, F-41100 Vendome (FR)
(74) Mandataire: Blot, Philippe Robert Emile
(86) Numéro de dépôt international: PCT/FR2007/000692
(87) Numéro de publication internationale: WO 2007/125192

(56) Documents cités:
- EP-A1- 0 948 897
- WO-A-98/48645
- WO-A-02/096209
- DE-C- 946 681
- FR-A1- 2 778 821
- JP-A- 61 158 746

## Description

La présente invention concerne un procédé d'aromatisation de produits fromagers ainsi que les produits fromagers obtenus par ce procédé.

Le procédé traditionnel de fabrication de fromages à partir de lait comporte notamment les étapes suivantes (voir par exemple Le fromage, Eck A. et Gillis J.C., 1997, 3ème édition, Lavoisier TEC & DOC, Paris) :
- coagulation par modification physicochimiques des micelles de caséine du lait pour donner un réseau protéique tridimensionnel, le coagulum ;
- tranchage du coagulum et élimination du lactosérum pour donner le caillé ;
- moulage du caillé, éventuellement pressage du caillé en moules ;
- acidification, éventuellement salage ou saumurage du caillé, et
- affinage du caillé.

C'est au cours de cette dernière étape d'affinage que le fromage acquiert l'essentiel de ses propriétés caractéristiques de texture et d'arôme.

Les composés d'arôme obtenus lors de l'affinage proviennent, notamment, d'une dégradation des constituants lipidiques et protéiques du caillé et d'une transformation des produits de digestion sous l'action d'enzymes microbiennes exo- ou intracellulaires.

Ainsi, la dégradation des lipides se fait sous l'action de lipases et celles des protéines sous l'action de protéases de type endopeptidases. Les peptides libérés par les endopeptidases peuvent être davantage dégradés par des exopeptidases qui libèrent des acides aminés. Ces acides aminés sont à l'origine d'un grand nombre de composés d'arôme, tels que des acides volatils, des alcools, des aldéhydes, des composés soufrés, des composés à noyau aromatique et des pyrazines. Un des principaux points de départ de la modification des acides aminés est catalysé par les transaminases (ou aminotransférases). Ces enzymes catalysent le transfert du groupement α-aminé des acides aminés sur un composé accepteur de groupement amine, tel que l'α-cétoglutarate (α-KG), pour donner des α-cétoacides. Les α-cétoacides obtenus se dé-carboxylent spontanément pour donner des aldéhydes qui peuvent eux-mêmes être transformés en acides ou en alcools. La teneur en cétoacides accepteurs peut être un facteur limitant pour le développement des composés d'arômes.

A ce titre, la demande de brevet français n°2 762 479 décrit l'utilisation d'un additif de préparation de fromage comprenant au moins un cétoacide pour intensifier la flaveur d'un fromage issu d'un procédé traditionnel. La demande de brevet français n°2 777 905 concerne, quant à elle, des souches de bactéries lactiques génétiquement modifiées pour être surproductrices d'α-cétoglutarate.

La demande internationale WO 98/48645 divulgue l'utilisation de cétoacides, dont l'α-cétoglutarate, pour intensifier la flaveur des fromages et des spécialités fromagères. Ces cétoacides sont incorporés directement ou indirectement dans le produit au cours des étapes suivantes traditionnelles de fabrication des fromages : trempage du produit pendant l'affinage dans une solution d'α-cétoglutarate, imprégnation du produit avec une solution concentrée, avant ou après salage par addition des cétoacides dans le sel ou dans la saumure, au moment du délactosage ou dans le rétentat d'ultrafiltration pour des fromages fabriqués à partir de rétentat.

L'étape d'affinage est un processus dispendieux car souvent long et nécessitant des investissements en équipements et locaux; de plus, la maîtrise des procédés d'affinage s'avère difficile pour assurer la régularité des caractéristiques organoleptiques des fromages finis. A titre d'exemple, pour les fromages sans flore superficielle d'affinage, comme le GOUDA, le développement des arômes peut requérir, selon les caractéristiques organoleptiques souhaitées, des durées d'affinages longues, de 3 à 6 mois.

Par ailleurs, le brevet européen EP 1 079 697 décrit un procédé, dit de « retexturation », de transformation d'une base fromagère de départ permettant d'obtenir des fromages ayant les caractéristiques aromatiques du fromage de départ et présentant une texture souple, élastique, voire fondante en bouche. Ce procédé comprend, notamment, une première étape de déstructuration limitée du réseau protéique d'une base fromagère, par action d'un traitement mécanique et thermique modéré, suivie d'une étape de refroidissement au cours de laquelle se produit une restructuration du réseau protéique et la constitution d'une émulsion stable des matières grasses avec les autres constituants de la base fromagère. Ce procédé de retexturation est généralement appliqué à des fromages âgés d'au moins quinze jours. Toutefois, il peut s'avérer intéressant, dans ce procédé, d'utiliser des bases fromagères plus jeunes, non affinées, comme cela est décrit dans la demande WO 02/096209 ; le produit obtenu dans ce cas présente cependant un goût neutre et une flaveur plate, car la base fromagère n'a pas eu le temps de développer des composés d'arôme. En effet, si l'on veut conférer aux produits issus de ce procédé de transformation des caractéristiques aromatiques d'un fromage affiné, il est nécessaire d'utiliser comme base fromagère des produits déjà affinés. Cette solution est coûteuse car elle ne permet pas de s'affranchir de l'étape d'affinage des fromages.

Or il peut-être Intéressant, d'un point de vue économique, de produire des fromages ayant des propriétés organoteptiques de fromages affinés, directement à partir de bases fromagères neutres, telles que celles utilisées dans le procédé décrit dans la demande WO 02/096209, ou d'autres matières premières fromagères obtenues par d'autres procédés, et ceci sans passer par une période prolongée d'affinage.

A cet égard, de façon surprenante, les inventeurs ont mis en évidence que l'incorporation d'agents d'arôme spécifiques et/ou de composés accepteurs de groupement amine (notamment des cétoacides) dans des bases fromagères, avant ou pen-dant le procédé de retexturation, n'inhibait pas le développement de ces ferments et le rôle spécifique des composés accepteurs de groupement amine sur le développement ultérieur des composés aromatiques.

Les Inventeurs ont mis également en évidence qu'en incorporant directement à ces bases fromagères soit des composés accepteurs de groupement amine, soit des ferments d'arôme spécifiques, soit une combinaison des deux, on pouvait obtenir des produits proches en caractéristiques organoleptiques et texturales des produits obtenus par le procédé traditionnel de production des fromages, en évitant les pertes des composés accepteurs de groupement amine dans le lactosérum et en permettant une meilleure maîtrise des procédés pour obtenir des produits de qualité homogène et régulière.

A ce titre, la présente invention a pour objet un procédé d'incorporation de composés accepteurs de groupement amine et/ou de ferments d'arôme spécifiques à des bases fromagères pour obtenir des produits présentant des caractéristiques organoleptiques semblables à celles de produits affinés obtenus par un procédé traditionnel de production des fromages et ceci dans des délais plus courts et à plus basse température d'affinage.

Le procédé d'incorporation de ces agents d'arôme utilise un procédé de retexturation qui consiste à mélanger et malaxer une ou plusieurs bases fromagères dans des conditions de température et d'agitation qui évitent la déstructuration complète de la (ou des) base(s) fromagère(s).

Ainsi, la présente invention concerne un procédé d'aromatisation d'un produit fromager par traitement d'au moins une base fromagère de départ, comprenant les étapes suivantes :
a) traitement thermique et mécanique de type pétrissage de la base fromagère de départ, optionnellement après fractionnement de celle-ci, à une température T₁ d'au plus 80°C, pour obtenir une déstructuration limitée du réseau protéique de la base fromagère de départ,
b) refroidissement du mélange de l'étape a) à une température T₂ située dans l'intervalle compris entre T₁ - 8°C et T₁ -20°C, avantageusement T₁ -10°C et T₁ - 15°C, les bornes étant incluses, pour obtenir une restructuration du réseau protéique et la constitution d'une émulsion stable ;
c) si nécessaire, traitement mécanique de la pâte obtenue en b) dans un appareillage à vis sans fin pour compléter la restructuration du réseau protéique et la stabilisation de l'émulsion ; et,
d) éventuellement, mise en forme du produit obtenu après l'étape c) ou après l'étape b) si l'étape c) est omise ;
caractérisé en ce que l'étape a) et/ou b) ci-dessus est réalisée en présence d'au moins un agent d'arôme sélectionné dans le groupe constitué de ferments d'arôme présentant une activité enzymatique accrue et une fragilisation de leur paroi cellulaire, de lysats de ferments d'arôme, et de composés accepteurs de groupement amine.

La présente invention concerne également un procédé de préparation d'un ferment d'arôme présentant une activité enzymatique accrue et une fragilisation de sa paroi cellulaire, dans lequel le ferment d'arôme est obtenu par culture dans des conditions sub-optimales de croissance.

La présente invention concerne également un ferment d'arôme présentant une activité enzymatique accrue et une fragilisation de sa paroi cellulaire susceptible d'être obtenu par le procédé de préparation de ferment d'arôme ci-dessus.

La présente invention concerne également l'utilisation d'au moins un ferment d'arôme présentant une activité enzymatique accrue et une fragilisation de sa paroi cellulaire tel que défini ci-dessus pour la production de produits fromagers.

### Ferments d'arôme

On désigne par «ferment d'arôme », ou « ferment d'affinage » tout microorganisme, notamment de type bactérien ou levure, permettant de développer les arômes d'un produit fromager, c'est-à-dire en particulier un microorganisme dégradant les constituants lipidiques et protéiques d'un caillé pour les transformer en molécules aromatiques. Les ferments d'arôme et d'affinage sont bien connus de l'homme du métier et sont notamment décrits dans « Le fromage », Eck A. et Gillis J.C., 1997, 3ème édition, Lavoisier TEC & DOC, Paris, pages 377-423.

On utilise dans l'invention au moins un ferment d'arôme présentant une activité enzymatique, notamment protéasique et/ou peptidasique, accrue et une fragilisation de sa paroi cellulaire, notamment par rapport au même ferment d'arôme cultivé dans des conditions standards, c'est-à-dire en particulier sur un milieu de culture standard.

On désigne par « conditions standards » et « milieu standard » respectivement des conditions et un milieu procurant une croissance optimale pour un ferment d'arôme. En particulier, le milieu standard n'est pas carencé, notamment en azote.

Pour un ferment d'arôme donné les conditions de culture standards et les milieux de culture standards sont bien connus de l'homme du métier. De tels conditions et milieux de cultures standards se caractérisent notamment par une culture de 6 h à 12 h sur un bouillon MRS (DeMan, Rogosa et Sharpe) incubé à 40 ± 3°C.

Les conditions de culture ou un milieu de culture procurant une croissance optimale d'un ferment d'arôme sont tels qu'ils procurent au ferment d'arôme l'ensemble des ressources nécessaires à sa croissance. En particulier, le milieu de culture n'est pas carencé, c'est-à-dire qu'aucun des composants de ce milieu, en particulier aucun des composants azotés de ce milieu, n'est présent en une quantité limitante, c'est-à-dire une quantité telle que la croissance du ferment d'arôme s'en trouve affectée, notamment ralentie. La détermination de la composition d'un milieu procurant une croissance optimale pour un ferment d'arôme peut être réalisée de manière routinière par un homme du métier. Par ailleurs des milieux procurant une croissance optimale d'un ferment d'arôme sont largement disponibles dans le commerce.

L'activité enzymatique, notamment protéasique et/ou peptidasique, d'un ferment d'arôme selon l'invention peut être évaluée à l'aide de nombreuses techniques bien connues de l'homme du métier et ainsi être comparée à celle d'un ferment d'arôme standard. En particulier, il est possible de mesurer l'activité amino-peptidasique de ces ferments. Pour cela on peut mesurer l'activité enzymatique de dégradation d'un substrat enzymatique modèle, par exemple la L-leucine-p-nitroanilide, notamment à l'aide du protocole illustré dans **l'Exemple 3.** II est également possible d'évaluer la protéolyse, c'est-à-dire la quantité de peptides et d'acides aminés libérés dans un produit fromager préparé à l'aide d'au moins un ferment d'arôme selon l'invention par rapport à un produit fromager témoins, c'est-à-dire un produit fromager préparé de manière semblable au produit fromager selon l'invention mais avec des ferments lactiques standards. On peut aussi évaluer la quantité de composés d'arômes libérés dans le produit fromager selon l'invention (par exemples aldéhydes branchés, alcools, cétones, esters ou composés issus du catabolisme des acides aminés soufrés) par rapport à un produit fromager témoin.

Un ferment d'arôme présentant une fragilisation de sa paroi cellulaire peut être caractérisés par la propriété d'être lysé plus rapidement, lorsqu'il est plongé dans une solution hypertonique par rapport à son cytoplasme, qu'un ferment d'arôme standard, ne présentant pas une fragilisation de sa paroi. Cette fragilisation peut aussi être évaluée par la sensibilité à la lyse d'un ferment d'arôme en présence d'agents de surface, tels que des agents osmotiques ou des détergents, d'enzymes, tel que le lysozyme ou la mutanolysine, ou de bactériocines, telle que la nisine ou la lacticine.

Il va de soi que lors de la comparaison des caractéristiques d'un ferment d'arôme selon l'invention avec un ferment d'arôme standard, les mesures sont réalisées dans les mêmes conditions.

L'activité enzymatique accrue et la fragilisation de la paroi cellulaire des ferments d'arôme selon l'invention permet, en particulier, une libération plus rapide, plus complète et plus importante des enzymes intra-cellulaires, notamment de type protéase et peptidase, par rapport à des ferments d'arôme ne présentant pas de fragilisation de leur paroi cellulaire, ce qui permet de développer de manière spectaculaire la flaveur de produits obtenus à l'aide de ces ferments d'arômes à paroi fragilisée.

Dans un procédé de préparation d'un ferment d'arôme présentant une activité enzymatique accrue et une fragilisation de sa paroi cellulaire selon l'invention, le ferment d'arôme est obtenu par culture dans des conditions sub-optimales de croissance.

Des « conditions sub-optimales de croissance » sont définies comme étant des conditions ne procurant pas au ferment d'arôme cultivé dans ces conditions une croissance optimale. Des conditions sub-optimales de croissance peuvent notamment être obtenues par culture sur un milieu carencé et notamment sur un milieu carencé en azote. Les conditions sub-optimales de croissances exactes dépendent en général de chaque souche et peuvent être définies de manière aisée par l'homme du métier en fonction de la (des) souche(s) considérée(s) et des caractéristiques finales souhaitées.

La détermination de conditions sub-optimales de croissance pour un ferment d'arôme donné peut être réalisée de manière routinière pour l'homme du métier à partir des conditions de croissance standards définies pour ce ferment d'arôme. En particulier l'homme du métier peut diminuer la concentration d'un ou plusieurs constituants d'un milieu de culture standard de ce ferment d'arôme, notamment d'un constituant azoté, de manière à affecter la croissance de ce ferment d'arôme sur ce milieu.

De préférence, la culture est réalisée jusqu'à atteindre une phase stationnaire de croissance qui peut ensuite être maintenue pendant une durée variable. La durée du maintien en phase stationnaire peut être ajustée en fonction du degré de fragilisation de la paroi cellulaire souhaité. L'évaluation de la phase de croissance dans laquelle se trouve une culture de ferment d'arôme, notamment la phase exponentielle de croissance et la phase stationnaire de croissance, peut être réalisée par des techniques bien connues de l'homme du métier, comme la spectrophotométrie, le suivi de la consommation d'oxygène ou le suivi de la consommation d'agents neutralisants tels que la soude.

Les cultures de ferments d'arôme issus de la culture ci-dessus présentent un rapport cellules viables/cellules non viables d'environ 10% qui peut être variable selon le ferment d'arôme considéré. Les cellules viables sont pour l'essentiel des cellules viables non cultivables qui peuvent être dénombrées par toute technique adéquate et notamment par les techniques bien connues de l'homme du métier que sont l'épifluorescence et la cytométrie de flux.

Les lysats de ferments d'arôme peuvent être obtenus par des moyens bien connus de l'homme du métier permettant d'obtenir une lyse partielle ou totale de cellules de micro-organismes, notamment :
- des moyens physiques : hautes pressions, homogénéisation,; broyages mécaniques, chocs thermiques, traitements de congélation/décongélation, pression osmotique,
- des moyens chimiques : traitement par des agents détergents, de l'alcool, des combinaisons sel/alcool,
- l'utilisation de bactériocines (nisine, pédiocines, entérocines...)
- l'utilisation d'agents susceptibles de fragiliser les parois (protamine, chitosan, sérine...).
- l'utilisation d'enzymes (lysozyme....)

Les ferments d'arôme à l'origine des lysats ou présentant une activité enzymatique accrue et une fragilisation de la paroi et utilisés dans le procédé de l'invention sont notamment issus des bactéries lactiques telles que des souches de Lactobacilles thermophiles homofermentaires (*Lactobacillus helveticus, Lactobacillus acidophilus , Lactobacillus bulgaricus)* ou hétérofermentaires *(Lactobacillus fermentum, Lactobacillus reuteri*), des souches de Lactobacilles mésophiles homofermentaires ou hétérofermentaires facultatifs (*Lactobacilles casei, Lactobacillus paracasei, Lactobacillus plantarum*), des souches de lactocoques *(Lactococcus lactis* subsp. *lactis, Lactococcus lactis* subsp. *cremoris, Lactococcus lactis* subsp. *lactis* biovar *diacetylactis*)*,* des souches de Pédiocoques (*Pediococcus acidilactici*), des souches de corynébactéries, des souches de bactéries propioniques *(Propionibacterium freudenreichii, P. shermanii*), des souches de levures et *de Geotrichum candidum.*

De préférence, le ferment d'arôme est obtenu à partir de la souche *Lactobacillus helveticus* BS121. Ce ferment provient de travaux de sélection, réalisés sur milieu modèle à partir d'une large collection de souches de Lactobacilles thermophiles, et en particulier de *Lactobacillus helveticus,* afin de développer différents ferments d'arôme conduisant à des notes aromatiques spécifiques. Cette souche a été déposée selon le Traité de Budapest, le 12 janvier 2006, auprès de la Collection Nationale de Culture de Microorganismes (CNCM, Paris, France) sous le numéro I - 3552.

Dans le procédé de l'invention, les taux d'inoculation de ferment d'arôme sont de 10⁵ à 10⁸ cellules de ferment/g de base fromagère, notamment de 10⁶ à 10⁷ cellules de ferment/g et les lysats inoculés de ferments d'arôme sont préparés à partir de 10⁵ à 10⁸ cellules de ferment/g de base fromagère, notamment de 10⁶ à 10⁷ cellules de ferment/g.

Les ferments d'arôme peuvent se présenter sous forme de culture concentrée ou non concentrée.

### Composés accepteurs de groupement amine

Les « composés accepteurs de groupement amine » désignent tout composé organique susceptible de se lier, notamment de façon covalente, à un groupement -NH₂ lors de réactions de transamination. Lors de ces réactions, notamment catalysées par des transaminases, un groupement -NH₂ est transféré depuis un composé aminé précurseur d'arôme vers un composé accepteur de groupement aminé. Les « précurseurs d'arôme aminé » désignent tout composé organique aminé susceptible de donner un composé d'arôme. A titre d'exemple, les acides aminés sont des précurseurs d'arômes aminés.

En particulier, les composés accepteurs de groupement amine sont des cétoacides, et plus particulièrement un α-cétoacide, tel que l'α-cétoglutarate, l'α-cétoisocaproate, le cétoisovalérate, un pyruvate, comme le phénylpyruvate, ou l'α-acétolactate. Un composé accepteur de groupement aminé particulièrement préféré selon l'invention est l'α-cétoglutarate.

Ces composés favorisent et accélèrent, en particulier, la dégradation des acides aminés en molécules aromatiques (tels que les aldéhydes branchés et aromatiques en particulier) et sont largement disponibles dans le commerce ou peuvent être produits selon le procédé décrit dans la demande de brevet français n°2 777 905.

De manière préférentielle, le composé accepteur de groupement amine est ajouté dans le procédé de l'invention à la teneur de 1 à 20 g/kg de base fromagère, notamment à la teneur de 10 g/kg.

### Base fromagère

On désigne par « base fromagère » une matière première fromagère susceptible d'être utilisée dans le procédé de l'invention pour donner un produit fromager, c'est-à-dire une matière première « retexturable », à savoir notamment :
1) un fromage, affiné ou non, obtenu par un procédé traditionnel, et en particulier avec un extrait sec supérieur à 40% en poids, tel qu'un fromage à pâte pressée, notamment non cuite, par exemple un GOUDA jeune âgé d'environ 3 semaines ou des fromages ayant un profil rhéologique similaire à celui d'une pâte pressée, c'est-à-dire en particulier un profil rhéologique similaire à celui d'une pâte pressée en terme de souplesse, cohésion et fermeté du produit, comme cela peut être mesuré à l'aide d'une machine universelle de compression / traction, notamment de type Instrom 4301 ; ce type de mesure est illustré dans **l'Exemple 2 ;**
2) un caillé ;
3) un produit fromager ayant un extrait sec total compris entre 40 et 60%, un taux de minéralisation Ca/ESD (Extrait Sec Dégraissé) inférieur à 2% et en particulier une pâte souple élastique, non friable présentant un profil rhéologique qui est sensiblement similaire à celui des fromages à pâte pressée, notamment obtenu par coagulation du lait après acidification par fermentation et/ou ajout de composés acidifiants, pour obtenir un pH compris entre 5,2 et 5,8, avantageusement entre 5,2 et 5,5, puis ajout d'une préparation enzymatique coagulante;
4) des concentrés de protéines laitières, tels que par exemple des ré-tentats d'ultrafiltration, liquides ou déshydratés, dans la mesure où ils sont re-texturables ;
5) éventuellement des chutes de découpe de fromages ;
6) le mélange de deux ou plus des matières premières fromagères ci-dessus, dans la mesure où le mélange est retexturable.

En particulier, le caillé peut être :
- un caillé jeune, non affiné, obtenu par un procédé traditionnel de fabrication du caillé (voir par exemple Le fromage, Eck A. et Gillis J.C., 1997, 3ème édition, Lavoisier TEC & DOC, Paris, pages 165-374), notamment par coagulation enzymatique et/ou fermentaire du lait, ou par ultrafiltration de lait suivi d'une acidification de l'ultrafiltrat par fermentation ;
- un caillé jeune, non affiné, obtenu par coagulation du lait après acidification par fermentation et/ou ajout de composés acidifiants, tels que l'acide lactique, l'acide citrique, la glucono-delta-lactone, pour obtenir un pH compris entre 5,2 et 5,8, avantageusement entre 5,2 et 5,5, puis ajout d'une préparation enzymatique coagulante selon le procédé décrit dans la demande WO 02/096209;
- un caillé de type « pâte filée », notamment non affiné (par exemple la Mozzarella),

Les bases fromagères peuvent être divisées ou broyées sous forme de morceaux, de râpé ou de semoule. Avantageusement, le fromage de départ est râpé en brins de diamètre compris entre 1,5 et 3 mm, par exemple à l'aide d'une râpe habituelle du commerce.

D'une manière générale, l'étape a) est réalisée avantageusement en soumettant la base fromagère de départ à un traitement thermique doux, consistant à chauffer à une température comprise entre 30 et 80°C, de préférence entre 30 et 65°C, de préférence encore entre 30 et 60°C, pendant une durée comprise entre 20 s et 3 min, de préférence de 45 s au plus, tout en brassant la pâte fromagère afin de réaliser un mélange homogène, sous cisaillement modéré, en particulier à une vitesse de brasage inférieure à 1000 tours/min, de préférence inférieure à 500 tours/min.

Des températures inférieures à 60°C permettent avantageusement de limiter la dégradation thermique des composés accepteurs de groupement amine lorsque ceux-ci sont présents.

Les traitements de l'étape a) sont effectués dans tout appareil approprié. On peut citer les systèmes à injection de vapeur, tels les "cutters" employés en charcuterie ou en technologie de fromage fondu et les pétrins utilisés en boulangerie.

La vitesse de brassage est avantageusement comprise entre 100 et 600 tours/min, de préférence 100 et 300 tours/min, pour des appareillages utilisés traditionnellement dans l'industrie fromagère. Ainsi, la vitesse de brassage est de préférence comprise entre 100 et 150 tours/min pour l'hélice d'un appareillage de type "pétrin" et 250 et 300 tours/min pour le couteau d'un appareillage de type "cutter".

L'étape b) est avantageusement conduite en refroidissant la pâte obtenue à une température comprise entre 25 et 50°C pendant une durée de 1 à 5 min. La température de refroidissement est dépendante de la température de chauffage mais n'est pas supérieure à 50°C.

Le traitement mécanique de l'étape b) est du même type que celui de l'étape a) bien que les conditions puissent varier dans la gamme spécifiée ci-dessus, les étapes a) et b) ont lieu avantageusement dans le même appareillage.

En particulier, les étapes a) et b) sont avantageusement menées sous vide partiel de façon à éviter les pertes aromatiques et réduire l'oxydation du produit ; le vide est avantageusement compris entre 0,4 et 0,7 bar (0,4.10⁵ Pa et 0,7.10⁵ Pa).

La pâte obtenue peut, à l'issue de l'étape b), être transférée dans un dispositif à vis sans fin où elle subit un traitement mécanique simple destinée à compléter la restructuration du réseau protéique et stabiliser l'émulsion. Le temps de séjour dans le dispositif à vis sans fin est avantageusement compris entre 30 secondes et 5 minutes. Par traitement mécanique simple, on entend un traitement de poussée sans autre effet supplémentaire, tel que thermique ou de pression, comme c'est le cas pour l'extrusion. A l'extrémité de sortie de la vis sans fin est éventuellement positionnée une formatrice.

On peut ajouter à la base fromagère de départ une quantité d'eau calculée selon l'extrait sec de la base fromagère de départ, qui n'excède pas 20 % en poids, notamment 15 % en poids, et est avantageusement supérieure à 7% en poids. Cet ajout est avantageux pour obtenir un produit fromager présentant une texture souple, élastique, voire fondante en bouche.

Les produits sortant de ce dispositif sont sous des formes variables (billes, formes cylindriques, ovoïdes, etc...) selon le profil de la formatrice placée à l'extrémité de sortie de la vis sans fin ; ils sont ensuite refroidis et emballés.

Les produits sortant du dispositif à vis sans fin peuvent également, à la sortie de la formatrice, être mis en moules pour conférer au produit final la forme définitive souhaitée. De façon avantageuse, on peut faire subir au produit placé dans le moule une légère opération de pressage pour améliorer le formage.

Le produit final est alors conditionné dans tout emballage approprié, enrobé avec des cires de fromagerie ou des substituts de celles-ci tels que des acétoglycérides ou des enrobages comestibles ; il peut être poussé également à la sortie de l'extrudeuse dans des coques plastiques par passage dans une conditionneuse bi-coque.

Par ailleurs, les agents d'arôme définis ci-dessus peuvent être incorporés avant ou au cours du procédé de retexturation (étape a et/ou b). En effet, du fait de l'absence d'élimination de substances solubles dans le procédé de l'invention ces agents restent dans la pâte évitant toute perte. Ainsi, de façon préférentielle les agents d'arôme sont ajoutés directement dans un cutter, ou un équipement équivalent, servant à traiter la base fromagère.

Dans un mode de réalisation particulier du procédé ci-dessus, l'agent d'arôme est constitué d'un ferment d'arôme présentant une activité enzymatique accrue et une fragilisation de la paroi cellulaire.

Dans un autre mode de réalisation particulier du procédé ci-dessus, l'étape a) et/ou b) définie ci-dessus est réalisée en présence d'au moins un composé accepteur de groupement amine et d'au moins un ferment d'arôme présentant une activité enzymatique accrue et une fragilisation de la paroi cellulaire et/ou lysat de ferment d'arôme, notamment en présence d'au moins un composé accepteur de groupement amine et d'au moins un lysat de ferment d'arôme, et plus particulièrement en présence d'au moins un composé accepteur de groupement amine et d'au moins un ferment d'arôme présentant une activité enzymatique accrue et une fragilisation de la paroi cellulaire. En effet, des essais réalisés par les Inventeurs ont montré que ce mode de réalisation était favorable à l'obtention d'arômes légèrement plus typés comparativement à l'incorporation de composés accepteurs d'arôme seuls, ou de ferments d'arôme, lysés ou non, seuls. Par ailleurs, les inventeurs ont montré que les composés accepteurs de groupement amine accéléraient la vitesse de dégradation des acides aminés en molécules aromatiques et la cinétique de développement des ferments d'arôme.

Dans un mode de réalisation préféré du procédé ci-dessus, l'agent d'arôme est ajouté à la base fromagère au cours de l'étape a), après broyage de celle-ci.

Dans un autre mode de réalisation préféré du procédé ci-dessus, l'agent d'arôme est ajouté au cours de l'étape b) au mélange de l'étape a).

Dans un autre mode de réalisation préféré du procédé ci-dessus, on ajoute à l'agent d'arôme au moins une souche de bactérie lactique, en particulier une souche de bactérie lactique utilisée traditionnellement en fromagerie, c'est-à-dire une souche de bactérie lactique qui ne présente pas une activité enzymatique accrue et une fragilisation de sa paroi cellulaire, et/ou au moins une source de peptides ou d'acides aminés en tant que précurseurs d'arôme. L'ajout de bactéries lactiques, qui apportent notamment des enzymes telles que les transaminases, est particulièrement avantageux dans le cas de l'emploi de bases fromagères dont la coagulation du caillé est obtenue par une acidification non biologique du lait, c'est-à-dire notamment par ajout de composés acidifiants tels que l'acide lactique, l'acide citrique, la glucono-delta-lactone, etc... La source de peptides et d'acides aminés est avantageuse lorsque ces composés, précurseurs d'arôme, sont présents en quantités insuffisantes, notamment lors de l'emploi de bases fromagères non affinées ; ces composés peuvent être ajoutés, par exemple, sous forme de broyats de fromages plus ou moins affinés.

Dans un mode de réalisation particulièrement préféré, l'invention concerne un procédé tel que défini ci-dessus, dans lequel :
- la base fromagère est constituée par un GOUDA jeune âgé d'environ 3 semaines ou un produit fromager ayant un extrait-sec total compris entre 40 et 60%, un taux de minéralisation Ca/ESD inférieur à 2% et en particulier une pâte souple élastique, non friable présentant un profil rhéologique qui est sensiblement similaire à celui des fromages à pâte pressée, ladite base fromagère étant notamment obtenue selon le procédé décrit dans la demande internationale WO 02/096209, c'est-à-dire en particulier par coagulation de lait après acidification par fermentation et/ou ajout de composés acidifiants, tels que l'acide lactique, l'acide citrique, la glucono-delta-lactone, pour obtenir un pH compris entre 5,2 et 5,8, avantageusement entre 5,2 et 5,5, puis ajout d'une préparation enzymatique coagulante, telle que la présure ;
- on divise la base fromagère sous forme de brins, de râpé ou de semoule ;
- on ajoute éventuellement de l'eau dans une quantité qui n'excède pas 20% en poids de l'extrait sec de la base fromagère de départ,
- on traite thermiquement et mécaniquement, par un traitement de type pétrissage, le mélange ci-dessus à une température d'au plus 60°C, de préférence de 30 à 60°C pendant une durée de 20 s à 3 mn, tout en assurant un brassage de la pâte à une vitesse comprise entre 200 et 2000 tours/mn, avec une vitesse de cisaillement comprise entre 10 et 200 s⁻¹ ;
- on refroidit le mélange traité à une température comprise entre 8 et 20°C ;
- éventuellement on met en forme le produit obtenu et on le conditionne ;
et dans lequel on ajoute et on mélange à la base fromagère divisée et/ou au mélange traité : un ferment d'arôme obtenu à partir de la souche *L. helveticus* BS121 présentant une activité enzymatique accrue et une fragilisation de sa paroi cellulaire, à un taux d'inoculation de 0,5 à 3% par rapport à la masse de base fromagère de départ, ce qui correspond à environ 10⁷-10⁸ cellules par gramme de base fromagère de départ, de l'α-cétogluturate à la teneur de 10 g/kg de base fromagère, et une source de peptides et d'acides aminés constituée d'un broyat de Gouda âgé d'environ 2 à 6 mois à une teneur de 0,5 à 10%, de préférence de 1 à 5% par rapport à la masse de base fromagère de départ.

Le produit fromager obtenu par ce mode de réalisation particulier a une texture souple, élastique et présente les caractéristiques analytiques et organoleptiques de fromages affinés de type GOUDA.

Le taux d'inoculation du ferment d'arôme obtenu à partir de la souche *L. helveticus* BS121 selon l'invention correspond à une dose équivalente à celle qui est utilisée en technologie fromagère traditionnelle.

L'étape de traitement thermique et mécanique est réalisée dans tout appareil approprié tels que des systèmes à injection de vapeur employés en charcuterie ou en technologie de fromage fondu, ou des pétrins de boulangerie.

Après 8 à 15 jours à température d'affinage de 12- 14°C le produit obtenu est plus typé et se rapproche d'une pâte pressée type GOUDA affiné 2 à 3 mois,

Le produit a été jugé par analyse sensorielle comparativement à un témoin GOUDA issu d'une technologie traditionnelle avec incorporation d'un ferment d'arôme traditionnel (soit environ 0,10 % sous forme concentrée par un moyen adéquat, notamment centrifugation - équivalent à environ 2 à 2,5% sans concentration). L'ajout de ferment d'arôme seul selon l'invention conduit à un développement d'arôme avec des caractéristiques différentes de celles du témoin; en outre, l'ajout d'α-cétoglutarate entraîne une note « diacétyle » plus marquée et une cinétique de production de composés aromatiques plus rapide (voir **l'Exemple 1).**

Ce produit présente des caractéristiques organoleptlques intéressantes et est fabriqué par un procédé simple, économique, plus facilement reproductible et permettant d'utiliser des précurseurs d'arôme solubles sans perte dans le lactosérum au cours du procédé contrairement à leur utilisation en fromagerie traditionnelle,

De préférence, le produit fromager obtenu selon le procédé de l'invention est affiné de 1 à 4 semaines à une température de 8°C à 16°C.

La présente demande décrit également un produit fromager susceptible d'être obtenu par un procédé tel que défini ci-dessus.

La présente demande décrit également l'utilisation d'un produit fromager tel que défini ci-dessus, préparé à partir d'un fromage affiné ou non, pour renforcer l'arôme de préparations culinaires ou de fromages fondus.

En particulier, afin de produire en un temps rapide un produit fromager pour renforcer l'arôme de préparations culinaires ou de fromages fondus, on pourra le laisser s'affiner à des températures accélérant le développement d'arômes (de 16 à 30°C).

L'invention sera davantage définie à l'aide des exemples ci-dessous donnés à titre illustratif et non limitatif,

### Exemple 1

### Préparation d'un produit fromager

L'objectif de cet exemple est d'étudier l'impact de l'addition de ferments d'arôme de type *Lactobacillus helveticus* (source de protéases, peptidases et transaminases) présentant une activité enzymatique peptidasique accrue et une fragilisation de la paroi cellulaire et/ou d'α-cétoglutarate (α-KG) sur le développement d'arôme et le catabolisme des acides aminés, en présence d'une source de peptides et acides aminés (broyat de Cheddar).

### 1. Préparation de la solution d'α-KG

L'α-KG (Biosaveurs, Montpellier, France) est dilué dans l'eau à la concentration de 40 mg pour 100 ml d'eau. Le pH de la solution est ensuite ajusté au pH de la matière première mise en oeuvre, soit ici pH = 5,5 avec de la soude 10N (400 g/l).

### 2. Préparation de la souche de Lactobacillus helveticus

La souche de *Lactobacillus* utilisée a été préparée par culture d'une souche de *Lactobacillus helveticus* BS121 (Numéro de dépôt CNCM, I-3552) sur un milieu à base de poudre de lait, carencé en azote (par rapport à la teneur en azote d'un milieu standard de composition identique), en présence d'un activateur de croissance (extrait de viande).

En fin de culture, l'activité aminopeptidasique totale est multipliée par 2 par rapport à une culture classique et on atteint un pourcentage de cellules dont la paroi cellulaire est fragilisée d'environ 90% par rapport à environ 10% en culture classique.

### 3. Formulation

La base fromagère choisie est du Gouda jeune non affiné âgé d'environ 3 semaines (fromage de type pâte pressée non cuite).

On divise 100% de cette base fromagère qui représente 90% de la formule et on la mélange à :
- 5% d'eau
- 5% de Cheddar âgé d'environ 5 - 6 mois (source de peptides et d'acides aminés) ;
- éventuellement une souche de *L. helveticus* BS121 à environ 10⁷ CFU/g préparée comme indiqué ci-dessus et/ou
- éventuellement 10 g/kg d'α-KG.

### 4. Préparation (cutterage/cuisson)

Le produit fromager est ensuite préparé comme indiqué précédemment à partir du mélange ci-dessus à une température de 55°C, sous une pression de 1 Bar, avec un brassage à 500 tours/mn pendant 40 secondes. Après traitement le produit obtenu est refroidi à 14°C puis laissé s'affiner à cette température.

### 5. Jury d'Analyse Sensorielle

Le produit fromager obtenu au dessus est soumis à un jury d'analyse sensorielle comprenant 10 experts qui en caractérise le goût. Brièvement les produits fromagers sont préparés comme indiqués ci-dessus en absence de ferment d'arôme et d'α-KG (E1), en présence de ferment d'arôme uniquement (E2), ou en présence de ferment d'arôme et d'α-KG (E3) après un affinage de 2, 4 ou 8 semaine (respectivement S+2, S+4 ou S+8). Les résultats de cette analyse sont présentés dans le tableau ci-dessous.

| **EXPERIENCE** | **AFFINAGE** | **GOUT** |
|---|---|---|
| **E1** (Témoin) | S+2 | Doux, légèrement acide, plat, fade |
| | S+4 | Plat, neutre. |
| | S+8 | Plat, neutre, pas de défaut |
| **E2** (*L. helveticus* BS121 utilisée seule) | S+2 | Légère acidité, aigrelet, frais, acide |
| | S+4 | Arôme plus fruité, plus aromatique, plus « fromager », légère caractéristique de « fromage à croûte lavée ». |
| | S+8 | Fruité, aromatique, fumé, fromage à Pâte Pressée cuite, légèrement acide |
| **E3** (*L. helveticus* BS121 + α-KG) | S+2 | Légère acidité, note « affinée » déjà perceptible |
| | S+4 | Un peu acide, « affiné », assez typé. |
| | S+8 | Note « affinée » marquée, assez de proche E2 mais un peu plus typé, un peu acide, fumé, aromatique. |

En conclusion, le ferment d'arôme utilisé seul ou associé à l'α-KG conduit à un développement d'arôme nettement supérieur à celui du témoin, avec des arômes de type « fruité », de type pâte pressée non cuite, et de type « fumé », et ceci dès la quatrième semaine.

Parallèlement, il a été vérifié que la protéolyse secondaire (libération de petits peptides et d'acides aminés) était fortement accélérée en présence de ce ferment d'arôme et que les composés aromatiques à l'origine du développement d'arôme provenaient bien de la dégradation des acides aminés, essentiellement par transamination.

### Exemple 2

### Mesure des caractéristiques rhéologiques d'un fromage à pâte pressée

Des échantillons de fromages sont prélevés à l'emporte-pièce en vue de l'analyse rhéologique (cylindre de 17 mm de diamètre et 20 mm de hauteur). Les analyses sont réalisées sur une machine universelle de compression/traction Instron 4301. Les mesures sont effectuées entre une plaque inférieure fixe et une sonde mobile, toutes deux de géométrie plane et recouvertes d'un papier lubrifiant de type Parafilm. La sonde axiale cylindrique d'axe vertical possède un diamètre de 59 mm. Le test appliqué est un test "TPA" (Texture Profil Analysis). Il est caractérisé par deux cycles identiques de compression uni-axiale avec un temps de repos entre les deux. Le taux de compression appliqué sur l'échantillon de fromage est de 75 % à une vitesse de 50 mm/min. On mesure la force (contrainte) en fonction du déplacement de la sonde. Différents points caractéristiques sont extraits des courbes obtenues : la force à 50 % de déformation, la force à la rupture et la force à 75 % de compression, la déformation à la rupture, la pente initiale et enfin, les différents paramètres issus d'une analyse informatisée obtenue au moyen d'un logiciel ; il s'agit de la cohésion (rapport des deux aires positives) et de l'élasticité (rapport des hauteurs des deux pics).

Pour chaque fromage analysé, trois mesures sont réalisées à partir de trois échantillons différents. Les paramètres analysés sont donc la moyenne de trois essais. Caractéristiques biochimiques d'un fromage à pâte pressé âgé de trois semaines :

| | |
|---|---|
| Extrait Sec Total (EST, g/100 g) | 54,5 |
| Matières grasses (MG, g/100 g) | 28,3 |
| pH | 5,2 |

Caractéristiques rhéologiques du même fromage :

| | |
|---|---|
| Force à la fracture = force maximale (N) | 24 ± 4,4 |
| Déformation à fracture (%) | ≥ 75 % ± 0 (18 s) |
| Pente à l'origine | 0,07 ± 0,01 |

### Exemple 3

### Protocole de dosage d'une activité aminopeptidasique

### 1. Préparation des solutions de dosage

On prépare une solution de tampon phosphate en mélangeant :
- un volume de solution de phosphate monopotassique KH₂PO₄ 0,1 M (13,6 g/l) ;
- deux volumes de solution de phosphate disodique Na₂HPO₄,2H₂O 0,1 M (17,8 g/l) ;

On prépare également une solution de substrat en mélangeant 6,03 mg de L-leucine-p-nitroanilide (L9125 Sigma) dans 1 ml de méthanol pour obtenir une solution à 24 mM.

### 2. Dosage

Les mélanges de dosages suivants sont réalisés :

| | Solution à doser (µl) | Substrat (µl) | Tampon phosphate (ml) |
|---|---|---|---|
| Témoin tampon | 0 | 0 | 3 |
| Témoin substrat | 0 | 200 | 2,8 |
| Témoin solution à doser | 100 | 0 | 2,9 |
| Solution à doser (contenant un ferment d'arôme) | 100 | 200 | 2,7 |

On laisse incuber les mélanges à 30°C pendant 1 heure puis on lit l'absorbance à 410 nm.

## Revendications

1. Procédé d'aromatisation d'un produit fromager par traitement d'au moins une base fromagère de départ, comprenant les étapes suivantes :
a) traitement thermique et mécanique de type pétrissage de la base fromagère de départ, à une température T₁ d'au plus 80°C, pour obtenir une déstructuration limitée du réseau protéique de la base fromagère de départ,
b) refroidissement du mélange de l'étape a) à une température T₂ située dans l'intervalle compris entre T₁ - 8°C et T₁ -20°C, pour obtenir une restructuration du réseau protéique et la constitution d'une émulsion stable ;
c) si nécessaire, traitement mécanique de la pâte obtenue en b) dans un appareillage à vis sans fin pour compléter la restructuration du réseau protéique et la stabilisation de l'émulsion ; et,
d) éventuellement, mise en forme du produit obtenu après l'étape c) ou après l'étape b) si l'étape c) est omise ;
**caractérisé en ce que** l'étape a) et/ou b) ci-dessus est réalisée en présence d'au moins un agent d'arôme sélectionné dans le groupe constitué de ferments d'arôme présentant une activité enzymatique accrue et une fragilisation de leur paroi cellulaire, de lysats de ferments d'arôme, et de composés accepteurs de groupement amine.

2. Procédé selon la revendication 1, dans lequel l'agent d'arôme est constitué d'un ferment d'arôme présentant une activité enzymatique accrue et une fragilisation de la paroi cellulaire.

3. Procédé selon la revendication 1, dans lequel l'étape a) et/ou b) est réalisée en présence d'au moins un composé accepteur de groupement amine et au moins un ferment d'arôme présentant une activité enzymatique accrue et une fragilisation de la paroi cellulaire et/ou lysat de ferment d'arôme.

4. Procédé selon l'une des revendications 1 à 3, dans lequel l'agent d'arôme est ajouté à la base fromagère au cours de l'étape a) après broyage de celle-ci.

5. Procédé selon l'une des revendications 1 à 4, dans lequel l'agent d'arôme est ajouté au cours de l'étape b) au mélange de l'étape a).

6. Procédé selon l'une des revendications 1 à 5, dans lequel le ferment d'arôme présentant une activité enzymatique accrue et une fragilisation de la paroi cellulaire est sélectionné dans le groupe constitué des souches de Lactobacilles thermophiles homofermentaires ou hétérofermentaires, des souches de Lactobacilles mésophiles homofermentaires ou hétérofermentaires facultatifs, des souches de Lactocoques, des souches de Pédiocoques, des souches de Corynébactéries, des souches de bactéries propioniques, des souches de levures et de *Geotrichum candidum.*

7. Procédé selon l'une des revendications 1 à 6, dans lequel le ferment d'arôme présentant une activité enzymatique accrue et une fragilisation de la paroi cellulaire est obtenu à partir de la souche *Lactobacillus helveticus* BS121. déposée selon le Traité de Budapest, le 12 janvier 2006, auprès de la Collection Nationale de Culture de Microorganismes (CNCM, Paris, France) sous le numéro I -3552.

8. Procédé selon l'une des revendications 1 à 7, dans lequel les taux d'inoculation de ferment d'arôme sont de 10⁵ à 10⁸ cellules de ferment / g de base fromagère, et/ou les lysats de ferment d'arôme sont préparés à partir de 10⁵ à 10⁸ cellules de ferment / g de base fromagère.

9. Procédé selon l'une des revendications 1 et 3 à 8, dans lequel le composé accepteur de groupement amine est un α-cétoacide.

10. Procédé selon l'une des revendications 1 et 3 à 8, dans lequel le composé accepteur de groupement amine est l'α-cétoglutarate.

11. Procédé selon l'une des revendications 1 et 3 à 10, dans lequel le composé accepteur de groupement amine est ajouté à la teneur de 1 à 20 g/kg de base fromagère.

12. Procédé selon l'une des revendications 1 à 11, dans lequel on ajoute à l'agent d'arôme au moins une souche de bactérie lactique et/ou au moins une source de peptides ou d'acides aminés.

13. Procédé selon l'une des revendications 1 à 12, dans lequel la base fromagère de départ est choisie parmi la liste constituée de fromages affinés ou non ; d'un caillé ; ou d'un produit fromager ayant un extrait sec total compris entre 40 et 60%, un taux de minéralisation Ca/ESD inférieur à 2%, obtenu par coagulation du lait après acidification par fermentation et/ou ajout de composés acidifiants, pour obtenir un pH compris entre 5,2 et 5,8, puis ajout d'une préparation enzymatique coagulante.

14. Procédé selon l'une des revendications 1 et 3 à 13, dans lequel :
- la base fromagére est constituée par un GOUDA jeune âgé de 3 semaines ou un produit fromager ayant un extrait-sec total compris entre 40 et 60%, un taux de minéralisation Ca/ESD inférieur à 2%, obtenu par coagulation du lait après acidification par fermentation et/ou ajout de composés acidifiants, pour obtenir un pH compris entre 5,2 et 5,8, puis ajout d'une préparation enzymatique coagulante ;
- on divise la base fromagère sous forme de brins, de râpé ou de semoule ;
- on traite thermiquement et mécaniquement, par un traitement de type pétrissage, le mélange ci-dessus à une température d'au plus 60°C, de préférence de 30 à 60°C pendant une durée de 20 s à 3 mn, tout en assurant un brassage de la pâte à une vitesse comprise entre 200 et 2000 tours/mn, avec une vitesse de cisaillement comprise entre 10 et 200 s⁻¹ ;
- on refroidit le mélange traité à une température comprise entre 8 et 20°C ;
- éventuellement on met en forme le produit obtenu et on le conditionne ;
et dans lequel on ajoute et on mélange à la base fromagère divisée et/ou au mélange traité : un ferment d'arôme obtenu à partir de la souche *L. helveticus* BS121 (déposé auprès de la CNCM sous le numéro I-3552) présentant une activité enzymatique accrue et une fragilisation de sa paroi cellulaire, à un taux d'inoculation de 0,5 à 3% par rapport à la masse de base fromagère de départ, de l'α-cétogluturate à la teneur de 10 g/kg de base fromagère, et une source de peptides et d'acides aminés constituée d'un broyat de Gouda âgé d'environ 2 à 6 mois à une teneur de 0,5 à 10%, de préférence de 1 à 5% par rapport à la masse de base fromagère de départ.

15. Procédé selon l'une des revendications 1 à 14, dans lequel le produit fromager obtenu est affiné de 1 à 4 semaines à une température de 88°C à 16°C.

## Patentansprüche

1. Verfahren zum Aromatisieren eines Käseproduktes durch Behandeln mindestens einer Ausgangskäsebasis, das die folgenden Schritte aufweist:
a) Wärme- und mechanisches Behandeln des Typs des Durchknetens der Ausgangskäsebasis bei einer Temperatur T₁ von höchstens 80°C, um eine begrenzte Destrukturierung des Proteinnetzwerks der Ausgangskäsebasis zu erhalten,
b) Kühlen der Mischung aus dem Schritt a) bei einer Temperatur T₂, die im Bereich zwischen T₁ - 8°C und T₁ - 20°C liegt, um eine Restrukturierung des Proteinnetzwerks und die Ausbildung einer stabilen Emulsion zu erhalten,
c) falls erforderlich, mechanisches Behandeln der in b) erhaltenen Paste in einer Endlosschneckenvorrichtung, um die Restrukturierung des Proteinnetzwerks und die Stabilisierung der Emulsion zu vervollständigen, und
d) gegebenenfalls Formen des erhaltenen Produktes nach dem Schritt c) oder nach dem Schritt b), wenn Schritt c) ausgelassen wird,
**dadurch gekennzeichnet, dass** obengenannter Schritt a) und/oder b) in Anwesenheit mindestens eines Aromastoffes durchgeführt wird, der aus der Gruppe bestehend aus Aromafermenten, die eine erhöhte Enzymaktivität und eine Versprödung ihrer Zellwand aufweisen, Aromaferment-Lysaten und Amingruppen-Akzeptorverbindungen ausgewählt wird.

2. Verfahren gemäß Anspruch 1, wobei der Aromastoff aus einem Aromaferment gebildet wird, das eine erhöhte Enzymaktivität und eine Versprödung der Zellwand aufweist.

3. Verfahren gemäß Anspruch 1, wobei Schritt a) und/oder b) in Anwesenheit mindestens einer Amingruppen-Akzeptorverbindung und mindestens eines Aromaferments, das eine erhöhte Enzymaktivität und eine Versprödung der Zellwand aufweist, und/oder eines Aromaferment-Lysats durchgeführt wird/werden.

4. Verfahren gemäß einem der Ansprüche 1 bis 3, wobei der Aromastoff der Käsebasis während des Schrittes a) nach einem Zerkleinern derselben hinzugefügt wird.

5. Verfahren gemäß einem der Ansprüche 1 bis 4, wobei der Aromastoff der Mischung des Schrittes a) während des Schrittes b) hinzugefügt wird.

6. Verfahren gemäß einem der Ansprüche 1 bis 5, wobei das Aromaferment, das eine erhöhte Enzymaktivität und eine Versprödung der Zellwand aufweist, aus der Gruppe bestehend aus Stämmen von thermophilen homofermentativen oder heterofermentativen Laktobazillen, Stämmen von fakultativen mesophilen homofermentativen oder heterofermentativen Laktobazillen, Laktokokkenstämmen, Pediokokkenstämmen, Corynebakterienstämmen, Propionibakterienstämmen, Hefestämmen und *Geotrichum candidum* ausgewählt wird.

7. Verfahren gemäß einem der Ansprüche 1 bis 6, wobei das Aromaferment, das eine erhöhte Enzymaktivität und eine Versprödung der Zellwand aufweist, aus dem Stamm *Lactobacillus helveticus* BS121 erhalten wird, der gemäß dem Budapester Vertrag am 12. Januar 2006 bei der Collection Nationale de Culture de Microorganismes (CNCM, Paris, Frankreich) unter der Nummer I-3552 hinterlegt wurde.

8. Verfahren gemäß einem der Ansprüche 1 bis 7, wobei die Aromaferment-Inokulationsraten 10⁵ bis 10⁸ Zellen Ferment/g Käsebasis betragen und/oder die Aromaferment-Lysate aus 10⁵ bis 10⁸ Zellen Ferment/g Käsebasis hergestellt werden.

9. Verfahren gemäß einem der Ansprüche 1 und 3 bis 8, wobei die Amingruppen-Akzeptorverbindung eine α-Ketosäure ist.

10. Verfahren gemäß einem der Ansprüche 1 und 3 bis 8, wobei die Amingruppen-Akzeptorverbindung α-Ketoglutarat ist.

11. Verfahren gemäß einem der Ansprüche 1 und 3 bis 10, wobei die Amingruppen-Akzeptorverbindung dem Gehalt von 1 bis 20 g/kg Käsebasis hinzugefügt wird.

12. Verfahren gemäß einem der Ansprüche 1 bis 11, wobei dem Aromastoff mindestens ein Milchsäurebakterienstamm und/ oder mindestens eine Peptid- oder Aminosäurequelle hinzugefügt wird.

13. Verfahren gemäß einem der Ansprüche 1 bis 12, wobei die Ausgangskäsebasis aus der Liste bestehend aus ausgereiften oder nicht ausgereiften Käsesorten, Käsebruch oder einem Käseprodukt mit einem Gesamttrockenextrakt von zwischen 40% und 60%, einer Ca/ESD-Mineralisierungsrate von kleiner als 2%, erhalten durch Gerinnung der Milch nach Säuerung durch Fermentation und/oder Zugabe von säurebildenden Verbindungen, um einen pH-Wert zwischen 5,2 und 5,8 zu erhalten, und anschließende Zugabe eines koagulierenden Enzympräparats, ausgewählt wird.

14. Verfahren gemäß einem der Ansprüche 1 und 3 bis 13, wobei:
- die Käsebasis aus einem jungen GOUDA mit einem Alter von 3 Wochen oder einem Käseprodukt mit einem Gesamttrockenextrakt von zwischen 40% und 60%, einer Ca/ESD-Mineralisierungsrate von kleiner als 2%, erhalten durch Gerinnung der Milch nach Säuerung durch Fermentation und/oder Zugabe von säurebildenden Verbindungen, um einen pH-Wert zwischen 5,2 und 5,8 zu erhalten, und anschließende Zugabe eines koagulierenden Enzympräparats gebildet wird,
- die Käsebasis in Form von Strängen, Raspeln oder Grieß geteilt wird,
- die obengenannte Mischung bei einer Temperatur von maximal 60°C, vorzugsweise 30°C bis 60°C während einer Dauer von 20 Sekunden bis 3 Minuten thermisch und mechanisch behandelt wird, mittels einer Behandlung des Typs des Durchknetens, wobei gleichzeitig ein Umrühren der Paste mit einer Geschwindigkeit von zwischen 200 Umdrehungen/Minute und 2000 Umdrehungen/min mit einer Schergeschwindigkeit von zwischen 10 s⁻¹ und 200 s⁻¹ sichergestellt wird,
- die behandelte Mischung bei einer Temperatur von zwischen 8°C und 20°C gekühlt wird,
- das erhaltene Produkt gegebenenfalls geformt und abgepackt wird,
und wobei der geteilten Käsebasis und/oder der behandelten Mischung folgendes hinzugefügt und beigemischt wird: ein Aromaferment, das aus dem Stamm *L. helveticus* BS121 erhalten wird (hinterlegt bei der CNCM unter der Nummer I-3553), aufweisend eine erhöhte Enzymaktivität und eine Versprödung seiner Zellwand, mit einer Inokulationsrate von 0,5% bis 3% bezüglich der Ausgangskäsebasis-Masse, α-Ketoglutarat mit dem Gehalt von 10 g/kg Käsemasse, und eine Peptid- und Aminosäurequelle, die aus zerkleinertem Gouda im Alter von etwa 2 bis 6 Monaten mit einem Gehalt von 0,5% bis 10%, vorzugsweise 1% bis 5% bezüglich der Ausgangskäsebasis-Masse gebildet wird.

15. Verfahren gemäß einem der Ansprüche 1 bis 14, wobei das erhaltene Käseprodukt bei einer Temperatur von 8°C bis 16°C für 1 bis 4 Wochen gereift wird.

## Claims

1. Method for flavouring a cheese product by processing at least one initial cheese base, comprising the following steps:
a) thermally and mechanically treating the initial cheese base by a kneading-type processing operation, at a temperature T₁ of a maximum of 80ºC, in order to obtain a limited destructuring of the protein network of the initial cheese base,
b) cooling the mixture of step a) to a temperature T₂ which is in the range between T₁ - 8ºC and T₁ - 20ºC, in order to obtain a restructuring of the protein network and the production of a stable emulsion;
c) if necessary, mechanically processing the paste obtained at b) in an endless screw device in order to complete the restructuring of the protein network and the stabilisation of the emulsion; and
d) optionally shaping the product obtained after step c) or after step b) if step c) is omitted; **characterised in that** the step a) and/or b) above is carried out in the presence of at least one flavouring agent which is selected from the group constituted by flavour ferments which have an increased level of enzyme activity and weakness of the cell wall, lysates of flavour ferments and amine group accepting compounds.

2. Method according to claim 1, wherein the flavouring agent is constituted by a flavour ferment which has an increased level of enzyme activity and weakness of the cell wall.

3. Method according to claim 1, wherein step a) and/or b) is carried out in the presence of at least one amine group accepting compound and at least one flavour ferment which has an increased level of enzyme activity and weakness of the cell wall and/or lysate of flavour ferment.

4. Method according to any one of claims 1 to 3, wherein the flavouring agent is added to the cheese base during step a) after the grinding thereof.

5. Method according to any one of claims 1 to 4, wherein the flavouring agent is added to the mixture of step a) during step b).

6. Method according to any one of claims 1 to 5, wherein the flavour ferment which has an increased level of enzyme activity and weakness of the cell wall is selected from the group constituted by homofermentary or heterofermentary thermophilic strains of Lactobacilli, optional homofermentary or heterofermentary mesophilic strains of Lactobacilli, strains of Lactococci, strains of Pediococci, strains of corynebacteria, strains of propionic bacteria, strains of yeasts and *Geotrichum candidum.*

7. Method according to any one of claims 1 to 6, wherein the flavour ferment which has an increased level of enzyme activity and weakness of the cell wall is obtained from the strain *Lactobacillus helveticus* BS121, registered in accordance with the Treaty of Budapest, 12^{th} January 2006, with the National Collection of Micro Organism Culture (CNCM, Paris, France) under the number I - 3552.

8. Method according to any one of claims 1 to 7, wherein the levels of inoculation of the flavour ferment are from 10⁵ to 10⁸ cells of ferment/g of cheese base, and/or the flavour ferment lysates are prepared based on from 10⁵ to 10⁸ cells of ferment/g of cheese base.

9. Method according to any one of claims 1 and 3 to 8, wherein the amine group accepting compound is an α-ketoacid.

10. Method according to any one of claims 1 and 3 to 8, wherein the amine group accepting compound is α-ketoglutarate.

11. Method according to any one of claims 1 and 3 to 10, wherein the amine group accepting compound is added at a content of from 1 to 20 g/kg of cheese base.

12. Method according to any one of claims 1 to 11, wherein at least one strain of lactic bacteria and/or at least one source of peptides or amino acids is/are added to the flavouring agent.

13. Method according to any one of claims 1 to 12, wherein the initial cheese base is selected from the list constituted by cheeses which may or may not be refined; a curd; or a cheese product which has a total dry extract of between 40 and 60%, a Ca/ESD (non-fatty dry extract) mineralisation level of less than 2% obtained by way of coagulation of milk after acidification by way of fermentation and/or addition of acidifying compounds, in order to obtain a pH which is between 5.2 and 5.8, then adding a coagulating enzyme preparation.

14. Method according to any one of claims 1 and 3 to 13, wherein:
- the cheese base is constituted by a young GOUDA of 3 weeks old or a cheese product which has a total dry extract of between 40 and 60%, a Ca/ESD mineralisation level of less than 2% obtained by way of coagulation of milk after acidification by way of fermentation and/or addition of acidifying compounds in order to obtain a pH of between 5.2 and 5.8, then adding a coagulating enzyme preparation;
- the cheese base is divided in the form of strands, grated matter or semolina-like matter;
- the above admixture is thermally and mechanically processed, with a kneading type processing operation, at a temperature of a maximum of 60ºC, preferably from 30 to 60ºC for a period of time of from 20s to 3 minutes, with the paste being stirred at a rate of between 200 and 2000 rpm, with a shearing speed of between 10 and 200s⁻¹;
- the processed admixture is chilled to a temperature of between 8 and 20ºC;
- optionally, the product obtained is shaped and packaged;
and wherein there is mixed and added to the divided cheese base and/or the processed admixture: a flavour ferment which is obtained from the strain *L. helveticus* BS121 (registered with CNCM under the number I-3552) which has an increased level of enzyme activity and weakness of the cell wall thereof, at an inoculation level of from 0.5 to 3% with respect to the mass of initial cheese base, α-ketoglutarate at a content of 10g/kg of cheese base and a source of peptides and amino acids constituted by ground Gouda which is matured for approximately from 2 to 6 months at a content of from 0.5 to 10%, preferably from 1 to 5% relative to the mass of initial cheese base.

15. Method according to any one of claims 1 to 14, wherein the cheese product obtained is refined for from 1 to 4 weeks at a temperature of from 8ºC to 16ºC.
